(19) Europäisches Patentamt
European Patent Office
Office européen des brevets

(11) Veröffentlichungsnummer: **0 534 248 A1**

(12) **EUROPÄISCHE PATENTANMELDUNG**

(21) Anmeldenummer: **92115562.8**

(22) Anmeldetag: **11.09.92**

(51) Int. Cl.5: **C10M 119/24**, //C10N20:06, C10N50:10,C10N70:00

(30) Priorität: **24.09.91 DE 4131689**

(43) Veröffentlichungstag der Anmeldung: **31.03.93 Patentblatt 93/13**

(84) Benannte Vertragsstaaten: **DE FR GB IT**

(71) Anmelder: **BAYER AG**
**W-5090 Leverkusen 1 Bayerwerk(DE)**

(72) Erfinder: **Rasp, Christian, Dr.**
**Klutstein 13**
**W-5060 Bergisch Gladbach 2(DE)**
Erfinder: **Timmermann, Ralf, Dr.**
**Weggenhofstrasse 6**
**W-4150 Krefeld(DE)**
Erfinder: **Perrey, Hermann, Dr.**
**Auf der Rheinaue 8**
**W-4150 Krefeld 11(DE)**
Erfinder: **Lehmann, Bernhard, Dipl.-Ing.**
**Kahlweg 15**
**W-5100 Aachen(DE)**
Erfinder: **Kussi, Siegfried**
**Brandenburger Strasse 43**
**W-5090 Leverkusen(DE)**

(54) **Verfahren zur Herstellung von Polyharnstoff-Fetten.**

(57) Die Erfindung betrifft ein neues, auch großtechnisch einsetzbares, dreiteiliges Verfahren zur Herstellung von Polyharnstoff-Schmierfetten, welches dadurch gekennzeichnet ist,

(a) daß man Polyharnstoffe, die oleophile Gruppen tragen, entweder lösungsmittelfrei auf einer Reaktionsschnecke bei 80-120 °C, vorzugsweise bei 85-95 °C, (Variante A) oder in toluolischem Milieu bei 20-80 °C, vorzugsweise bei 30-60 °C, (Variante B) durch Umsetzung von Diisocyanaten mit Aminen herstellt;

(b) daß man die nach (a) hergestellten Polyharnstoffe nach vollständigem Durchreagieren im festen, trockenen Zustand zu Pulvern mahlt (wobei wenigstens 70 Gewichts-% des Pulvers Korngrößen von etwa 100 - 400 µ haben) und

(c) daß man das gemahlene Rohprodukt nach "Anteigen" (Benetzen) bei erhöhter Temperatur im eingesetzten Grundöl (10 - 30 Minuten bei 140 - 180 °C) und Wiederabkühlung auf Raumtemperatur in einem Hochdruckhomogenisator bei einem Druck von 400 - 1 500 bar (wobei Selbsterwärmung bis auf etwa 100 °C auftritt) durch vollständige Homogenisierung - ggf. in mehreren Durchläufen - zu einem Fett verarbeitet,

wobei Fette erzeugt werden mit gut reproduzierbaren und im wesentlichen gleichen Eigenschaften wie bei der bisher üblichen in-situ-Fabrikation.

EP 0 534 248 A1

Die Erfindung betrifft ein neues, auch großtechnisch einsetzbares Verfahren zur Herstellung von Polyharnstoff-Schmierfetten, welche bekanntermaßen für zahlreiche industrielle Anwendungen eingesetzt werden können.

Polyharnstoff-Fette werden heute in situ durch Umsetzung von Aminen mit Isocyanaten im Grundöl hergestellt. Dabei wirft der Umgang mit Isocyanaten bei den Fettherstellern erhebliche technische Probleme auf. Trotz der technischen Vorteile in Relation zu Schmierfetten auf Basis von Metallseifen wirkt sich dieser Umstand negativ auf die weitere Verbreitung der Polyharnstoff-Fette aus. Daher stellte sich die Aufgabe, einen Weg zu finden, wobei die chemische Umsetzung vorweggenommen wird und beim Fetthersteller nurmehr durch Auflösung und Einarbeitung eines pulverförmigen Polyharnstoffs in ein Grundöl ein Fett mit gleichen Eigenschaften erzeugt werden kann wie bei herkömmlicher in-situ-Fabrikation.

Technische Schmierfette sind homogene Produkte von halbflüssiger bis fester Konsistenz. Sie bestehen im wesentlichen aus der Dispersion eines Dickungsmittels in einem flüssigen Schmierstoff (sogenanntes Grundöl, Basisöl oder Trägeröl), z. B. einem handelsüblichen Mineralöl oder Syntheseöl. Die besondere, typische Struktur der Schmierfette wird durch das Dickungsmittel bestimmt, dem somit eine primäre Bedeutung für anwendungstechnische Eigenschaften zukommt.

lien oder Polyharnstoffverbindungen, welche alle als geeignete Verdickungsmittel bekannt sind, zu fixieren.

Zu diesem Stand der Technik sei auf folgende Publikationen hingewiesen, wobei Dokument [2] eine Übersicht über das Gebiet der Polyharnstoff-Fette gibt:

[1] "Manufacture and Application of Lubricating Greases", C.J. Boner, National Lubricating Grease Institute, Kansas City, Reprint 1983, Seite 677 ff.

[2] "Hochtemperatur-Fette auf der Basis von Polyurea-Gel: Eine Übersicht", W.J. Bartz, Arbeitskreis Schrifttumsauswertung Schmierungstechnik, Bericht Nr. 10-88, 15.05.1988 (ISSN 0342-4288/1107), und weitere Literaturzitate,

[3] "High Temperature Greases based on Polyurea Gellants: A Review", P.S. Venkataramani, Journal of Synthetic Lubrication 1987 Vol. 4, No. 3, Seiten 229-244.

[4] "Lubricating Grease Guide", National Lubricating Grease Institute, Kansas City, First Edition 1984, Revised 1987, Seiten 1.13, 1.14, 2.16, 4.12, 4.13 (ISBN 0-9613935-1-3).

[5] DE-B-1 284 554

[6] DE-A-2 604 343

[7] US-A-4 129 512

[8] EP-A-0 233 757

[9] EP-A-0 236 022

Die Prozeßparameter wie Aufheizkurve, Endtemperatur, Abkühlverlauf, Rührgeschwindigkeit, Konzentrationsverhältnisse und Art und Intensität der Homogenisierung prägen dabei entscheidend die mechanisch-dynamischen und physikalischen Eigenschaften des Fettes. Das diskontinuierliche Herstellverfahren hat heute noch die weiteste Verbreitung und besteht aus folgenden Verfahrensschritten:

- Reaktionsphase: offener Kessel oder beheizbarer Autoklav
- Strukturphase: heiz- und kühlbare Rührwerke (Ausbildung des Netzwerkes im Verdickungsmittel und Anlagerung der Grundöle)
- Mechanische Phase: Zugabe von Wirkstoffen, Homogenisierung, Entlüftung.

Nichtseifenfette auf der Basis organischer Eindicker (z. B. Polyharnstoffe) haben aufgrund ihres Verdickungssystems eine hohe thermische Beständigkeit und ein ausgezeichnetes mechanisch-dynamisches Verhalten. Sie finden Verwendung zur Schmierung von hochtourigen Lagern und Getrieben bei Temperaturen über 150 °C und Betriebszeiten über 500 Stunden.

Sie übertreffen die Leistungsfähigkeit der klassischen Lithium-Mehrzweckfette deutlich, konnten sich aber aus Preis-, Produktions- und Verfügbarkeitsgründen bisher nicht auf breiter Front durchsetzen.

Das rheologische Verhalten von Polyharnstoff-Schmierfetten unterscheidet sich von konventionellen Metallseifen. Dies wird damit begründet, daß das gebildete Netzwerk nicht nur durch Nebenvalenzen und physikalische Kräfte, sondern auch durch chemische Brückenbindung stabilisiert wird. Zudem sind die aromatischen Molekülgruppen in der Lage, eingebrachte mechanische Energie (Atomschwingungen in Elektronenschwingung) umzusetzen (Mesomerieeffekte).

Reaktionsschema der Polyharnstoff-Bildung aus Diisocyanat und Aminen

(vgl. G. Schmidt: "Gel-, Bentonit- und Polyharnstoff-Schmierfette," Tribologie und Schmierungstechnik Bd. 31 (6), 1984, Seiten 309-314)

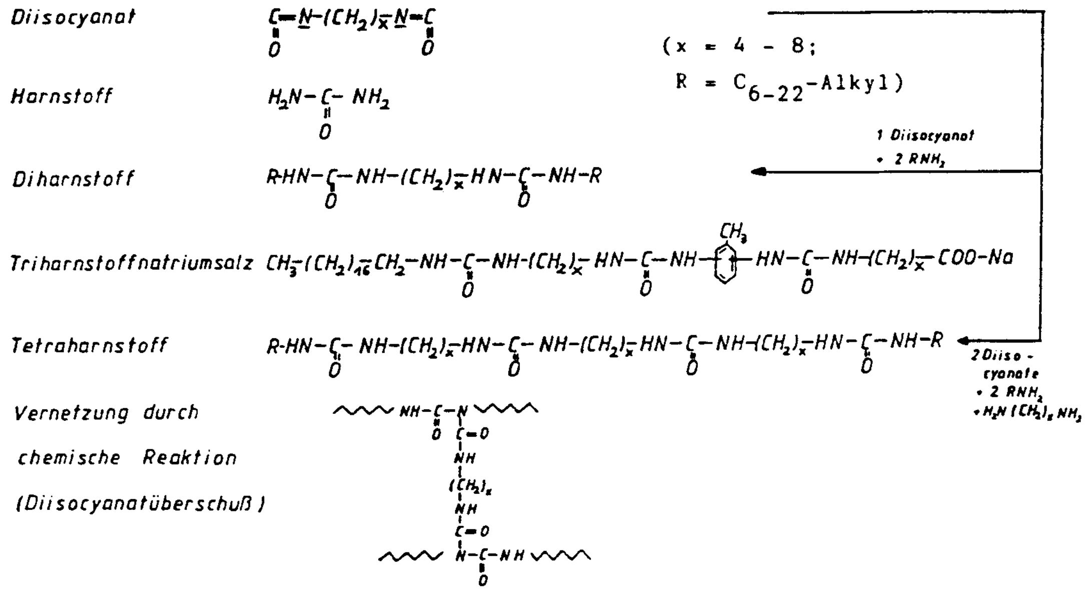


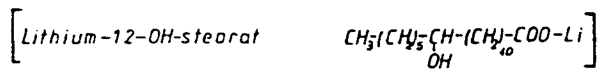


Die Herstellung der Polyharnstoff-Dickungskomponente erfolgt in der Regel im Grundöl in situ durch äquimolekulare Umsetzung von aromatischen Diisocyanaten mit ein- und/oder zweiwertigen Aryl- bzw. Alkylaminen. Diisocyanate (MDI = Methylenbis(phenylisocyanat) = 4,4'-Diisocyanatodiphenylmethan; TDI = Toluylendiisocyanat) sind wegen ihrer besonderen Reaktivität als gefährliche Arbeitsstoffe klassifiziert und müssen mit besonderer Vorsicht gehandhabt werden. MDI und TDI sind wegen ihrer Neigung zur Dimerisierung wärmeempfindlich.

Diese Umstände beschränken die Zahl der möglichen Polyharnstoff-Schmierfettproduktionsstätten und zwingen zu einer exakten Steuerung von Rohstoffanlieferung, Lagerhaltung und Fettfertigung.

Um diese Schwierigkeiten zu umgehen, läßt sich prinzipiell auch folgender Weg zur Herstellung von Polyharnstoff-Fetten einschlagen: Einarbeiten von separat hergestellten Polyharnstoffen in das Grundöl. (vgl. Dokument [2]).

Dies gelingt aber bisher nur im Labormaßstab mäßig zufriedenstellend; vor allem muß dabei ein ganz lockeres, extremes Feinkorn (< 50 $\mu$) an Polyharnstoff in das Grundöl eingemischt werden. Die Herstellung dieses Feinkorns ist technisch zwar möglich, aber sehr aufwendig , teuer und schlecht reproduzierbar.

Ein auch in technischem Maßstab einsetzbares Verfahren zur Fettherstellung nach diesem Prinzip - d. h. durch Dispergierung von vorproduziertem Polyharnstoff im Grundöl - war bisher nicht bekannt.

Es wurde nun überraschend gefunden, daß man die gewünschten Polyharnstoff-Fette auch in technischem Maßstab nach einem dreiteiligen Verfahren herstellen kann, welches dadurch gekennzeichnet ist,

(a) daß man Polyharnstoffe, die oleophile Gruppen tragen, entweder lösungsmittelfrei auf einer Reaktionsschnecke bei 80-120 °C, vorzugsweise bei 85-95 °C, (Variante A) oder in toluolischem Milieu bei 20-80 °C, vorzugsweise bei 30-60 °C, (Variante B) durch Umsetzung von Diisocyanaten mit Aminen herstellt;

(b) daß man die nach (a) hergestellten Polyharnstoffe nach vollständigem Durchreagieren im festen, trockenen Zustand zu Pulvern mahlt (wobei wenigstens 70 Gewichts-% des Pulvers Korngrößen von etwa 100 - 400 $\mu$ haben) und

(c) daß man das gemahlene Rohprodukt nach "Anteigen" (Benetzen) bei erhöhter Temperatur im eingesetzten Grundöl (10 - 30 Minuten bei 140 - 180 °C) und Wiederabkühlung auf Raumtemperatur in einem Hochdruckhomogenisator bei einem Druck von 400 - 1 500 bar (wobei Selbsterwärmung bis auf etwa 100 °C auftritt) durch vollständige Homogenisierung - ggf. in mehreren Durchläufen - zu einem Fett verarbeitet,

wobei Fette erzeugt werden mit gut reproduzierbaren und im wesentlichen gleichen Eigenschaften wie bei der bisher üblichen in-situ-Fabrikation.

Unter "oleophile Gruppen" sind hier im wesentlichen Alkylgruppen mit 6 - 22 C-Atomen zu verstehen.

Als Ausgangsstoffe für die Polyharnstoffherstellung nach Schritt (a) werden als Diisocyanate vorzugsweise Toluylendiisocyanat (TDI) und Methylenbis(phenylisocyanat) (= 4,4'-Diisocyanato-diphenylmethan) (MDI) eingesetzt.

Als Amine werden sowohl primäre aliphatische oder aromatische Monoamine als auch Diamine eingesetzt, als Monoamine vorzugsweise Stearylamin (StA) und Hexylamin (HA), als Diamine vorzugsweise Hexamethylendiamin (HMDA) oder 4,4'-Diamino-diphenylmethan (MDA).

Die Komponenten werden im allgemeinen in stöchiometrischen Mengenverhältnissen zur Umsetzung gebracht (s. Beispielteil).

So erhält man beispielsweise einen Polyharnstoff der (statistischen) Zusammensetzung

*StA-TDI-HMDA-TDI-StA*

mit 4 Harnstoff-Gruppen und einem Molgewicht von 1002 g/Mol durch Umsetzung von 1 Mol (116 g) Hexamethylendiamin mit 2 Mol (2 x 174 g) Toluylendiisocyanat und 2 Mol (2 x 269 g) Stearylamin (=PH-1 gemäß Beispiel 1).

Wichtig ist in jedem Fall, daß die Polyharnstoffbildung am Ende von Verfahrensschritt (a) vollständig ist, d. h. daß die Reaktionsmassen völlig durchreagiert haben, da nur so der für die Erzielung einer guten Fettkonsistenz erforderliche Vernetzungsgrad im Polyharnstoff (durch sog. Filamentbildung) erreicht und gewährleistet werden kann.

Weitere Einzelheiten zu den Varianten A und B gemäß Verfahrensschritt (a) werden im nachfolgenden Beispielteil beschrieben.

Die bei Verfahrensschritt (a) anfallenden Polyharnstoffe werden gemäß Schritt (b) zu Pulvern zermahlen, wobei ein Pulverkorn von 100 - 400 µ Korngröße völlig ausreichend ist und zusätzliches Feinmahlen sowie aufwendiges Aussieben entfallen.

Das so gewonnene Polyharnstoffpulver läßt sich gemäß Schritt (c) in den jeweils gewünschten Konzentrationen im Grundöl dispergieren ("anteigen", benetzen) und wird zusammen mit dem Grundöl in einer offenen Rührapparatur für ca. 15. Minuten auf etwa 170 °C erhitzt und dann unter Rühren abgekühlt. Die Konzentration des Polyharnstoffs im Grundöl liegt im allgemeinen im Bereich von etwa 5 - 15 Gewichts-%, vorzugsweise von 6 - 12 Gewichts-%.

Als Grundöle werden, wie oben angegeben, handelsübliche Mineralöle oder - gegebenenfalls modifizierte - synthetische Öle verwendet, insbesondere Poly-α-Olefine, ferner auch natürliche und synthetische Polyester, Polyether oder Polyether-ester (vgl. Beispielteil).

Schließlich werden die vor-dispergierten "angeteigten" Pulver nach Abkühlung auf Raumtemperatur in einem Hochdruckhomogenisator - der im Prinzip einer Dieseleinspritzpumpe gleicht und ein aufgeschlämmtes Feinkorn im Spritzspalt stark zu zerkleinern vermag - bei verschiedenen Drücken behandelt, gegebenenfalls in mehreren Durchläufen - in den meisten Fällen sind 2 Durchläufe ausreichend -, wodurch die Vorprodukte schließlich die typische Fettkonsistenz erlangen.

Weitere Einzelheiten zu den Verfahrensschritten (b) und (c) werden ebenfalls im Beispielteil beschrieben.

Das erfindungsgemäße Verfahren ermöglicht erstmals auch Fettherstellern, die keine Konzession zum "Arbeiten mit Isocyanaten" haben, die - isocyanatfreie - Herstellung von Polyharnstoff-Fetten aus vom chemischen Hersteller bezogenen Polyharnstoff-Pulvern nach Schritt (c) des erfindungsgemäßen Verfahrens, wobei diese Schmierfette die gleiche Qualität besitzen wie die mittels der bisher eingesetzten in-situ-Technik hergestellten Polyharnstoff-Fette.

Polyharnstoff-Fette werden, wie oben angegeben, für zahlreiche industrielle Anwendungen eingesetzt. Dazu gehören Papiermaschinen, Bergbau-Ausrüstung, Kraftfahrzeuge, Rollenlager beim Metall-Tiefziehen und Schmiervorgänge in der Sintermetalltechnik, (vgl. z. B. Dokument [2]).

## Beispiele

### I) Allgemeine Angaben zum Verfahrensschritt (a) - Variante A

Zur lösungsmittelfreien Herstellung von Polyharnstoff-Pulvern auf einer (doppelläufigen) Reaktionsschnecke wurden folgende Bedingungen gewählt:

| | | |
|---|---|---|
| - | Länge der Schnecke: | 50 cm |
| - | Beheizung der Schnecke | |
| | Innenheizung: | 70 °C |
| | Mantelheizung: | 80 °C |
| - | Drehzahl der Schnecke: | 6 U/min |
| - | daraus resultierende Verweilzeit des Produktes: | ca. 2 min |
| - | Fördermenge: | ca. 2 kg/h |

Selbstverständlich sind hierbei die für das Arbeiten mit Aminen und Isocyanaten geltenden Sicherheitsvorkehrungen strengstens zu beachten.

Beim Durchsatz der Ausgangsprodukte durch die Reaktionsschnecke ist eine gute Durchmischung von Diisocyanat- und Amin-Komponente gewährleistet unter rascher Bildung eines Präpolymers, das nach Verlassen der Schnecke durch langsame Nachreaktion unter allmählicher Abkühlung (1-2 Stunden) zu einem fertigen, steife Massen (Brocken) bildenden Polyharnstoff durchreagiert, welcher anschließend zu einem Pulver gemahlen wird.

II) Allgemeine Angaben zum Verfahrensschritt (a)-Variante B

Zur Herstellung von Polyharnstoff-Pulvern in toluolischem Medium wurden die einzelnen Ausgangsprodukte zu je ca. 10 % in Toluol vorgelöst. Die Isocyanat-Toluollösung wurde vorgelegt. Die Amine wurden gleichzeitig in Toluol unter Erwärmung auf ca. 50 °C gelöst. Nachdem die Aminmischung klar gelöst war, wurde diese langsam unter Rühren in die Isocyanat-Toluollösung eingebracht.

Um eine gleichmäßige Durchmischung zu gewährleisten, muß dabei die Rührgeschwindigkeit schrittweise erhöht werden, da das Reaktionsprodukt zu einer gallertartigen Konsistenz verdickt (Zugabe von Toluol zwecks besserer Durchmischung ist möglich).

[Das hier zu verwendende "toluolische Medium" kann neben Toluol auch noch andere, aprotische polare Lösungsmittel als zusätzliche Verdünnungsmittel bzw. Reaktionshilfsmittel enthalten, vorzugsweise aus den Gruppen der cyclischen Ether, wie z. B. Tetrahydrofuran, oder der tertiären Amine (z. B. ®DESMORAPID, das die Addition von Aminen an Isocyanate katalysiert)].

Nach einer Rührzeit von 15 Min. wurde das Lösungsmittel am Rotationsverdampfer bei Wasserstrahlvakuum und einer Badtemperatur von 80 °C abdestilliert.

Das Produkt wurde anschließend auf Emailleblechen im Trockenschrank bei 50 - 60 °C über Nacht getrocknet.

III) Allgemeine Angaben zu den Verfahrensschritten (b) und (c):

Die gemäß den Varianten A und B des Verfahrensschrittes (a) erhaltenen, gut getrockneten und völlig durchreagierten Polyharnstoff-(Roh)produkte wurden zum "Anteigen" und anschließenden Homogenisieren wie folgt weiterbehandelt:

- Die Rohprodukte wurden 1-mal mittels einer geeigneten Mühle (z. B. einem handelsüblichen STARMIX-Gerät für 100 g-Mengen) zu einem Pulver (mit Korngrößen üblicher STARMIX-Qualität; 1 Minute/Stufe 3) gemahlen; Sieben entfällt.
- Die auf diese Weise gewonnen Polyharnstoff-Pulver wurden dann in verschiedenen Konzentrationen im Grundöl dispergiert, in einer Rührapparatur für 15 Min. auf ca. 170 °C erhitzt und unter Rühren abgekühlt.

- Die auf diese Weise "angeteigten" (dispergierten) Polyharnstoffpulver wurden anschließend in einem Hochdruckhomogenisator bei verschiedenen Drücken nachbehandelt, in manchen Fällen in 2 oder mehr Durchsätzen.

Verwendet wurde der APV-Homogenisator "MICRON LAB 40" der Fa. APV Gaulin, Lübeck. Dieses Gerät erlaubt ein Arbeiten im Druckbereich von 400 - 1 500 bar, der übliche Arbeitsdruck liegt bei 700 bar; bei diesem optimalen Druck empfiehlt sich eine 2-malige Homogenisierung zur Erreichung einer guten Fettkonsistenz.

IV) Chemischer Aufbau der eingesetzten Verdicker

Beispiel 1 [PH = Polyharnstoff]

Der folgende Polyharnstoff mit 4 Harnstoff-Gruppen wurde hergestellt nach Verfahrensschritt (a)-/Variante A und Variante B, wobei in beiden Fällen gleiche Ergebnisse erhalten wurden, d. h. Produkte gleicher Zusammensetzung und Eigenschaften:
StA - TDI - HMDA - TDI - StA [PH-1]

| | |
|---|---|
| Toluylendiisocyanat (Desmodur T 80) (TDI) | 2 Mol à 174 g = 348 g entspr. 34,7 % |
| Hexamethylendiamin (HMDA) | 1 Mol à 116 g = 116 g entspr. 11,6 % |
| Stearylamin (StA) | 2 Mol à 269 g = 538 g entspr. 53,7 % |
| Molgewicht | = 1002 g entspr. 100 % |

Beispiel 2

Der folgende Polyharnstoff mit 6 Harnstoff-Gruppen [PH 2] wurde hergestellt nach Verfahrensschritt (a)-/Variante B:
StA-TDI-HMDA -TDI - HMDA -TDI - StA [PH-2]

| | |
|---|---|
| Toluylendiisocyanat (Desmodur T 80) (TDI) | 3 Mol à 174 g = 522 g entspr. 41,6 % |
| Hexamethylendiamin (HMDA) | 2 Mol à 116 g = 232 g entspr. 18,0 % |
| Stearylamin (StA) | 2 Mol à 269 g = 538 g entspr. 41,6 % |
| Molgewicht | = 1292 g entspr. 100 % |

Beispiel 3

Der folgende Polyharnstoff mit 4 Harnstoff-Gruppen [PH-3] wurde hergestellt nach Verfahrensschritt (a)-/Variante B:
HA-TDI-HMDA-TDI-HA [PH-3]

| | |
|---|---|
| Toluylendiisocyanat (Desmodur T 80) (TDI) | 2 Mol à 174 g = 348 g entspr. 44,5 % |
| Hexamethylendiamin (HMDA) | 1 Mol à 116 g = 116 g entspr. 29,7 % |
| Hexylamin (HA) | 2 Mol à 101 g = 202 g entspr. 25,8 % |
| Molgewicht | = 666 g entspr. 100 % |

V) Die aus diesen Polyharnstoffen hergestellten Fette und ihre typischen Eigenschaften - im Vergleich zu zwei Handelsprodukten - sind in der nachfolgenden Tabelle 1 zusammengestellt:

Tabelle I: POLYHARNSTOFF-FETTE

| Polyharnstoff-Fett [PH–F] Beispiel-Nr. | Verdicker Polyharnstoff [PH] s.-IV- | Gehalt in Grundöl [Gew.-%] | Grundöl Trägeröl[1)] | Ruhepenetration[2)] [0.1 mm] | Walkpenetration 60 DH[3)] [0.1 mm] | W/R[4)] | Tropfpunkt[5)] [°C] |
|---|---|---|---|---|---|---|---|
| a) [PH-F]-Handelsprodukte: | | | | | | | |
| "PETAMO GHY 441" (Fa. Klüber Lubrication München KG) | | | Ester/PAO | 265 | 325 | 1.23 | > 250 |
| "URETHYN E 2" (Fa. Reiner Chemie, Weilerbach) | | | - | 189 | 235 | 1.24 | 273 |
| b) Erfindung: | | | | | | | |
| PH-F 1 | PH-1 | 7.5 | ISO 100 | 324 | 328 | 1.01 | 209 |
| PH-F 2 | PH-1 | 8.5 | ISO 100 | 290 | 326 | 1.12 | 230 |
| PH-F 3 | PH-1 | 6.0 | PAO (ISO 100) | 303 | 348 | 1.15 | 232 |
| PH-F 4 | PH-1 | 7.5 | PAO (ISO 100) | 280 | 326 | 1.16 | 230 |
| PH-F 5 | PH-1 | 9.0 | PAO (ISO 100) | 252 | 274 | 1.09 | 242 |
| PH-F 6 | PH-1 + PH-2 | 5.0+ 5.0 | ISO 100 | 347 | 365 | 1.05 | 235 |
| PH-F 7 | PH-1 + PH-2 | 6.0 + 6.0 | ISO 100 | 289 | 328 | 1.13 | 244 |
| PH-F 8 | PH-1 + PH-3 | 5.0 + 5.0 | PAO (ISO 100) | 290 | 320 | 1.10 | 243 |

## Anmerkungen zu Tabelle I

1) Grundöl/Trägeröl:
"ISO 100": ein naphthenbasisches Solventraffinat bestimmter Viskosität
"PAO (ISO 100)": ein Poly-$\alpha$-Olefin bestimmter Viskosität

2) Prüfmethode: DIN 51804/1

3) Prüfmethode: DIN 51804/1 (DH = Doppelhübe)

4) W/R = Verhältnis von Walkpenetration 60 DH 3) zu Ruhepenetration 2)

5) Prüfmethode: DIN 51801/1

**Patentansprüche**

**1.** Verfahren zur Herstellung von Polyharnstoff-Fetten, dadurch gekennzeichnet,
(a) daß man Polyharnstoffe, die oleophile Gruppen tragen, entweder lösungsmittelfrei auf einer Reaktionsschnecke bei 80 - 120 °C (Variante A) oder in toluolischem Milieu bei 20 - 80 °C (Variante B) durch Umsetzung von Diisocyanaten mit Aminen herstellt;
(b) daß man die nach (a) hergestellten Polyharnstoffe nach vollständigem Durchreagieren im festen, trockenen Zustand zu Pulvern mahlt (wobei wenigstens 70 % des Pulvers Korngrößen von etwa 100 - 400 $\mu$ haben) und
(c) daß man das gemahlene Rohprodukt nach "Anteigen" (Benetzen) bei erhöhter Temperatur im eingesetzten Grundöl (10 - 30 Minuten bei 140 - 180 °C) und Wiederabkühlung auf Raumtemperatur in einem Hochdruckhomogenisator bei einem Druck von 400 - 1 500 bar durch vollständige Homogenisierung - ggf. in mehreren Durchläufen - zu einem Fett verarbeitet

**2.** Verfahren nach Anspruch 1, dadurch gekennzeichnet, daß man die Umsetzung gemäß (a) auf einer Reaktionsschnecke bei 85 - 95 °C oder in toluolischem Milieu bei 30 - 60 °C durchführt.

**3.** Verfahren nach Anspruch 1, dadurch gekennzeichnet, daß der Hochdruckhomogenisator gemäß (c) bei einem Druck von 650 - 750 bar arbeitet.

**4.** Verfahren nach Anspruch 1, dadurch gekennzeichnet, daß die Konzentration des Polyharnstoffs im Grundöl bei (c) im Bereich von etwa 5 - 15 Gewichts-%, vorzugsweise von 6 - 12 Gewichts-% liegt.

**5.** Verfahren nach Anspruch 1, dadurch gekennzeichnet, daß bei (a), Variante A oder B, ein Polyharnstoff der (statistischen) Zusammensetzung

*StA-TDI-HMDA-TDI-StA*

mit 4 Harnstoff-Gruppen und dem Molgewicht 1002 g/Mol hergestellt wird durch Umsetzung von Toluylendiisocyanat (TDI) mit Hexamethylendiamin (HMDA) und Stearylamin (StA) im Molverhältnis 2:1:2.

Europäisches Patentamt

# EUROPÄISCHER RECHERCHENBERICHT

Nummer der Anmeldung

EP 92 11 5562

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 236 022 (HITACHI LTD)<br>* Seite 6, Zeile 22 - Zeile 27 *<br>* Seite 7, Zeile 24 - Seite 8, Zeile 1 *<br>* Seite 8, Zeile 13 *<br>* Seite 9, Zeile 15 - Zeile 21 *<br>* Seite 23; Beispiel 6 *<br>* Seite 44; Beispiele 76,77; Tabelle 10 *<br>--- | 1,2,4 | C10M119/24<br>//(C10N20:06)<br>(C10N50:10)<br>(C10N70:00) |
| A | US-A-3 284 357 (T.H KOUNDAKJIAN)<br>* Spalte 2, Zeile 36 - Zeile 40 *<br>--- | 1,4 | |
| A | US-A-3 154 491 (A.C BORG)<br>* Spalte 5, Zeile 33 - Zeile 38 *<br>* Spalte 5, Zeile 61 - Zeile 62 *<br>* Spalte 6, Zeile 32 - Zeile 36 *<br>--- | 1,4 | |
| A | FR-A-1 498 356 (INSTITUT FRANCAIS DU PETROLE ,DES CARBURANTS ET LUBRIFIANTS)<br>* Seite 3, linke Spalte, Zeile 28 - Zeile 30 *<br>--- | 1 | |
| | | | RECHERCHIERTE SACHGEBIETE (Int. Cl.5 ) |
| A | US-A-3 879 305 (M. EHRLICH)<br>* Spalte 2, Zeile 66 - Spalte 3, Zeile 2 *<br>* Spalte 3; Beispiel III *<br>--- | 1,4 | C10M |
| A | US-A-3 243 372 (J.L DREHER)<br>* Spalte 2, Zeile 23 *<br>* Spalte 2, Zeile 32 *<br>* Spalte 2, Zeile 44 *<br>* Spalte 3; Beispiel 2 *<br>--- | 5 | |
| A | GB-A-1 348 176 (CHEVRON RESEARCH COMPANY)<br>* Seite 3; Tabelle I *<br>----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 10 DEZEMBER 1992 | HILGENGA K.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)